(19) Europäisches Patentamt
European Patent Office
Office européen des brevets

(11) **EP 3 314 768 B1**

(12) **EUROPÄISCHE PATENTSCHRIFT**

(45) Veröffentlichungstag und Bekanntmachung des Hinweises auf die Patenterteilung:
**04.03.2020   Patentblatt 2020/10**

(51) Int Cl.:
*H03M 13/09* *(2006.01)*    *H04L 9/32* *(2006.01)*
*H03M 13/00* *(2006.01)*

(21) Anmeldenummer: **16750131.1**

(22) Anmeldetag: **29.07.2016**

(86) Internationale Anmeldenummer:
**PCT/EP2016/068151**

(87) Internationale Veröffentlichungsnummer:
**WO 2017/045824 (23.03.2017 Gazette 2017/12)**

(54) **VORRICHTUNG UND VERFAHREN ZUM ERSTELLEN EINER ASYMMETRISCHEN PRÜFSUMME**

APPARATUS AND METHOD FOR PRODUCING AN ASYMMETRIC CHECKSUM

DISPOSITIF ET PROCÉDÉ POUR CRÉER UNE SOMME DE CONTRÔLE ASYMMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2015   DE 102015217724**

(43) Veröffentlichungstag der Anmeldung:
**02.05.2018   Patentblatt 2018/18**

(73) Patentinhaber: **Siemens Mobility GmbH**
**81739 München (DE)**

(72) Erfinder: **ASCHAUER, Hans**
**81829 München (DE)**

(56) Entgegenhaltungen:
- **Helmut Witten ET AL: "Kann man RSA vertrauen? Asymmetrische Kryptografie für die Sekundarstufe I", LOG IN Heft, Informatische Bildung und Computer in der Schule, 1. Dezember 2012 (2012-12-01), Seiten 79-91, XP055307837, Gefunden im Internet: URL:http://bscw.schule.de/pub/bscw.cgi/d10 24037/RSA_Sek1.pdf [gefunden am 2016-10-05]**
- **Anonymous: ""RSA-Kryptosystem" - Versionsunterschied - Wikipedia", , 15. September 2015 (2015-09-15), Seiten 1-14, XP055307752, Gefunden im Internet: URL:https://de.wikipedia.org/w/index.php?t itle=RSA-Kryptosystem&diff=146057000&oldid =145881181 [gefunden am 2016-10-05]**
- **WITTEN H., SCHULZ, R.-H.: "RSA & Co. in der Schule - Moderne Kryptologie, alte Mathematik, raffinierte Protokolle. Neue Folge - Teil 2: RSA für grosse Zahlen", LOG IN, Bd. 26, Nr. 143, 2006, Seiten 50-58, XP009192000,**
- **Anonymous: ""Hill-Chiffre" - Wikipedia", , 7. Juni 2015 (2015-06-07), XP055308196, Gefunden im Internet: URL:https://de.wikipedia.org/w/index.php?t itle=Hill-Chiffre&diff=142872892&oldid=142 872455 [gefunden am 2016-10-06]**

**Beschreibung**

Die Erfindung bezieht sich auf ein Verfahren und Geräte zur Bildung einer asymmetrischen Prüfsumme und zur Prüfung der asymmetrischen Prüfsumme.

Bei der Übertragung von Daten treten gelegentlich Fehler auf, die die übertragenen Daten verändern. Um dies zu verhindern, wird häufig eine sogenannte Prüfsumme der Daten berechnet und zusammen mit diesen übertragen oder gespeichert. Beim Empfang oder Auslesen der Daten wird wiederum die Prüfsumme berechnet und mit der mit übertragenen Prüfsumme verglichen. Sind die beiden Checksummen gleich, so wird davon ausgegangen, dass mit hoher Wahrscheinlichkeit kein Fehler aufgetreten ist. Die Höhe dieser Wahrscheinlichkeit lässt sich prinzipiell aus den Eigenschaften des Berechnungsverfahrens (Prüfsummenfunktion) und dem angenommenen Fehlermodell berechnen oder abschätzen.

Meist besteht für konkrete Anwendungen die Anforderung, dass sich die Prüfsummenfunktion effizient berechnen lässt. Beispiele für solche Prüfsummenfunktionen sind CRC16 (cyclic redundancy check 16) oder CRC32 (cyclic redundancy check 32). Bei sicherheitsrelevanten Geräten werden oft durch Kunden oder Regularien bestimmte Sicherheitsintegritätslevel, wie beispielsweise in der Sicherheitsnorm EN 61508 festgelegt, gefordert. Dafür ist eine Gefährdungsbeurteilung erforderlich, in deren Rahmen auch die eingesetzten Prüfsummenfunktionen überprüft werden. Hierbei ist beispielsweise der Nachweis zu erbringen, dass nicht durch einen Fehler im Programmablauf trotz tatsächlich fehlerhafter Prüfsumme diese fälschlicherweise als richtig erkannt wird.

Dabei besteht das grundsätzliche Problem, dass nach dem Stand der Technik der Algorithmus zur Überprüfung der Prüfsumme auch den Algorithmus zur Berechnung der Prüfsumme enthält.

Ein Empfänger einer Nachricht muss prinzipiell die Prüfsumme selbst berechnen, wobei der Empfänger nachfolgend auch als Verifizierer oder Verifizierergerät bezeichnet wird. Bei einer Fehlfunktion des Verifizierergerätes wird grundsätzlich davon ausgegangen, dass das Verifizierergerät die Prüfsumme über die verfälschten Daten versehentlich selbst nochmal berechnet und das Ergebnis der beiden eigenen Berechnungen vergleicht, was die Funktion der Prüfsumme aushebelt, so dass keine Fehler mehr erkannt werden können. Sollte der Verifizierer die Daten mit der verfälschten Prüfsumme weiterleiten, würden auch anderen Verifizierer keine Fehler mehr erkennen können.

Aus Helmut Witten et al.: "Kann man RSA vertrauen? Asymmetrische Kryptografie für die Sekundarstufe I", LOG IN Heft, Informatische Bildung für Computer in der Schule, 1. Dezember 2012, Seiten 79-91 und abrufbar unter http://bscw.schule.de/pub/bscw.cgi/d1024037/RSA Sekl.pdf sowie Anonymous: ""RSA-Kryptosystem" - Versionsunterschied-Wikipedia", 15. September 2015, Seiten 1-4 und abrufbar unter https://de.wikipedia.org/w/index.php?title=RSA-Kryptosystem&diff=1463057000&oldid=145881181 sind StandardVerfahren zur asymmetrischen Kryptographie unter Nutzung einer Einwegfunktion bekannt.

Die Aufgabe der vorliegenden Erfindung ist es ein Verfahren und Geräte zur Berechnung und Prüfung einer asymmetrischen Prüfsumme bereitzustellen.

Die Aufgabe wird durch die in den unabhängigen Ansprüchen angegebenen Merkmalen gelöst. In den Unteransprüchen sind vorteilhafte Weiterbildungen der Erfindung dargestellt.

Gemäß einem ersten Aspekt betrifft die Erfindung ein Verfahren zum rechnergestützten Erstellen einer asymmetrischen Prüfsumme durch einen ersten Kommunikationspartner, bei dem ein Prozessor zum Ausführen der Verfahrensschritte programmiert ist. Das Verfahren umfasst einen Verfahrensschritt zum Berechnen einer abgebildeten Prüfsumme mittels einer bijektiven Abbildung aus einer ersten Prüfsumme, wobei die erste Prüfsumme aus der Menge aller möglichen Prüfsummen mittels einer ersten Funktion jeweils einer Nachricht aus einer Menge aller möglichen Nachrichten zugeordnet wird, wobei die erste Prüfsumme insbesondere durch eine Abbildung der Menge aller möglichen Prüfsummen durch eine zweite Funktion auf eine erste Menge aufbereitet wird. Das Verfahren umfasst einen weiteren Verfahrensschritt zum Verteilen von einer Information, welche eine Umkehrfunktion zu der bijektiven Abbildung definiert, an mindestens einen zweiten Kommunikationspartner, wobei mittels der Umkehrfunktion die erste Prüfsumme aus der Berechnen einer abgebildeten Prüfsumme mittels einer bijektiven Abbildung aus einer ersten Prüfsumme, wobei die erste Prüfsumme aus der Menge aller möglichen Prüfsummen mittels einer ersten Funktion jeweils einer Nachricht aus einer Menge aller möglichen Nachrichten zugeordnet wird, wobei die erste Prüfsumme insbesondere durch eine Abbildung der Menge aller möglichen Prüfsummen durch eine zweite Funktion auf eine erste Menge aufbereitet wird. Das Verfahren umfasst einen weiteren Verfahrensschritt zum Verteilen von einer Information, welche eine Umkehrfunktion zu der bijektiven Abbildung definiert, an mindestens einen zweiten Kommunikationspartner, wobei mittels der Umkehrfunktion die erste Prüfsumme aus der abgebildeten Prüfsumme berechnet wird. Das Verfahren umfasst einen weiteren Verfahrensschritt zum Übermitteln der abgebildeten Prüfsumme und der Nachricht an den mindestens einen zweiten Kommunikationspartner.

Insbesondere wird das Aufbereiten der ersten Prüfsumme durch die Abbildung der Menge aller möglichen Prüfsummen durch die zweite Funktion auf die erste Menge durchgeführt, bevor die bijektiven Abbildung berechnet wird.

Mit dem Verfahren wird sichergestellt, dass der zweite Kommunikationspartner, ebenfalls als Empfänger, Verifizierer oder Verifizierergerät bezeichnet, nicht fälschlicherweise die richtige Prüfsumme berechnet, obwohl die zu prüfende Nachricht fehlerhaft ist. Es kann beispielsweise durch einen Fehler im Programmablauf vorkommen, dass trotz tatsächlich fehlerhafter Nachricht oder Prüfsumme diese fälschlicherweise als richtig erkannt wird.

Mit dem Verfahren wird außerdem sichergestellt, dass der zweite Kommunikationspartner nicht im Besitz der Information ist, um die abgebildete Prüfsumme versehentlich zu berechnen. Zur Verifikation der Prüfsumme genügt die Information, welche die Umkehrfunktion definiert. Durch den asymmetrischen Aufbau des der Prüfsummenerzeugung und der Prüfsummenverifizierung enthält somit der Verifizieralgorithmus nicht mehr den Algorithmus zur Prüfsummenerzeugung.

Das Verfahren verwendet vorzugsweise zur Berechnung einer asymmetrischen Prüfsumme nicht-kryptographische asymmetrische Verfahren, damit die asymmetrische Prüfsumme möglichst schnell berechnet werden kann. Damit das Verfahren möglichst effizient ist, können beispielsweise Schlüssellängen der eingesetzten Verfahren sehr kurz gewählt werden. Diese können somit viel kürzer gewählt werden, als es für sicherheitskritische Anwendungen erforderlich wäre.

Das Aufbereiten der Menge aller möglichen Prüfsummen durch die zweite Funktion auf die erste Menge, kann dazu dienen die Prüfsummen zunächst in ein Format zu bringen, mit dem eine bijektive Abbildung erst möglich ist oder mit der eine bijektive Abbildung besonders einfach zu berechnen ist. Bei einer konkreten Implementierung bereitet beispielsweise die zweite Funktion die erste Prüfsumme auf, bevor die bijektive Abbildung berechnet wird.

Bei dem Verfahren wird zusätzlich zur Nachricht und der abgebildeten Prüfsumme, die erste Prüfsumme an den zweiten Kommunikationspartner gesendet.

Durch das Senden der ersten Prüfsumme an den zweiten Kommunikationspartner, wird die Prüfung der Korrektheit der Nachricht noch weiter verbessert. Dies wird dadurch erreicht, dass die erste Prüfsumme zusätzlich mit der Prüfsumme verglichen wird, die durch den zweiten Kommunikationspartner berechnet wird.

Bei weiteren Ausführungsformen des Verfahrens bildet das Berechnen der abgebildeten Prüfsumme ein Geheimnis, das dem ersten Kommunikationspartner bekannt ist.

Dadurch, dass nur dem ersten Kommunikationspartner bekannt ist, wie die abgebildete Prüfsumme berechnet wird, ist es extrem unwahrscheinlich, dass durch einen Programmierfehler für eine fehlerhafte Nachricht fälschlicherweise eine korrekte Prüfsumme berechnet wird.

Bei weiteren Ausführungsformen des Verfahrens wird das Aufbereiten der erste Prüfsumme mit der zweiten Funktion in einem ersten Vorverarbeitungsschritt vor dem Berechnen der abgebildeten Prüfsumme durchgeführt, wobei die bijektiven Abbildung insbesondere eine Abbildung der ersten Menge auf sich selbst ist.

Gemäß einem weiteren Aspekt betrifft die Erfindung ein Verfahren zum rechnergestützten Prüfen einer Nachricht mittels einer asymmetrischen Prüfsumme durch einen zweiten Kommunikationspartner, bei dem ein Prozessor zum Ausführen der Verfahrensschritte programmiert ist. Das Verfahren umfasst einen Verfahrensschritt zum Empfangen einer Information, welche eine Umkehrfunktion zu einer bijektiven Abbildung definiert, von einem ersten Kommunikationspartner. Das Verfahren umfasst einen weiteren Verfahrensschritt zum Empfangen einer abgebildeten Prüfsumme und einer Nachricht von einem ersten Kommunikationspartner. Das Verfahren umfasst einen weiteren Verfahrensschritt zum Berechnen einer zweiten Prüfsumme mittels der Umkehrfunktion unter Verwendung der abgebildeten Prüfsumme, wobei die zweite Prüfsumme aus der Menger aller möglichen Prüfsummen mittels einer ersten Funktion jeweils einer Nachricht aus einer Menge aller möglichen Nachrichten zugeordnet wird, wobei die Menge aller möglichen Prüfsummen mit einer zweiten Funktion auf eine erste Menge abgebildet werden, wobei die bijektiven Abbildung eine Abbildung der ersten Menge auf sich selbst ist. Das Verfahren umfasst einen weiteren Verfahrensschritt zum Berechnen einer dritten Prüfsumme über die Nachricht. Das Verfahren umfasst einen weiteren Verfahrensschritt zum Feststellen einer Korrektheit der Nachricht, falls die zweite Prüfsumme mit der dritten Prüfsumme eine Übereinstimmung aufweist.

Bei dem Verfahren wird zusätzlich zur Nachricht und der abgebildeten Prüfsumme, eine erste Prüfsumme vom ersten Kommunikationspartner empfangen, wobei die erste Prüfsumme zusätzlich mit der zweiten Prüfsumme und/oder der dritten Prüfsumme verglichen wird, und wobei die Korrektheit der Nachricht festgestellt wird, falls die erste Prüfsumme mit der zweiten Prüfsumme und/oder der dritten Prüfsumme eine Übereinstimmung aufweist.

Durch das Empfangen der ersten Prüfsumme vom ersten Kommunikationspartner, wird die Prüfung der Korrektheit der Nachricht noch weiter verbessert. Dies wird dadurch erreicht, dass die erste Prüfsumme zusätzlich mit der Prüfsumme verglichen wird, die durch den zweiten Kommunikationspartner berechnet wird.

Bei weiteren Ausführungsformen des Verfahrens wird das Aufbereiten der dritten Prüfsumme mit der zweiten Funktion in einem zweiten Vorverarbeitungsschritt vor dem Feststellen der Korrektheit der Nachricht durchgeführt wird, wobei die bijektiven Abbildung insbesondere eine Abbildung der ersten Menge auf sich selbst ist.

Allgemein kann durch die Aufbereitung einer Prüfsumme durch die zweite Funktion beispielsweise die Prüfsumme in eine Form gebracht werden, mit der entweder erst eine bijektive Abbildung möglich ist, die bijektive Abbildung leichter berechenbar ist oder die bijektive Abbildung bestimmte vordefiniere Eigenschaften, beispielsweise mathematische Bedingungen, erfüllt. Die Informationen über die zweite Funktion können dem zweiten Kommunikationspartner separat übermittelt werden oder in den Informationen über die Umkehrfunktion enthalten sein.

Bei weiteren Ausführungsformen des Verfahrens bildet die zweite Funktion eine 64-Bit Prüfsumme auf eine 32-Bit Prüfsumme ab oder die zweite Funktion ist die Identität.

Das Abbilden lässt sich sehr effizient durch einen Prozessor auf unterschiedlichen Rechnerarchitekturen berechnen. Insofern eignet sich deren Verwendung als zweite Funktion besonders gut, da diese schnell durch einfaches Abschneiden der überzähligen Bits berechenbar ist.

Die Identität kann beispielsweise für Anwendungsfälle verwendet werden, bei denen die Menger aller möglichen Prüfsummen bzw. die erste Prüfsumme nicht durch die zweite Funktion verändert werden soll.

Bei weiteren Ausführungsformen des Verfahrens ist die erste Menge oder die Menge aller möglichen Prüfsummen ein Monoid, wobei das Monoid als neutrales Element das Einselement umfasst und für das Monoid eine Operation einer Verknüpfung definiert ist, wobei der erste Kommunikationspartner ein invertierbares Element des Monoids auswählt, wobei der erste Kommunikationspartner ein invertiertes Element zu dem invertierbaren Element berechnet, wobei die abgebildete Prüfsumme mittels der bijektiven Abbildung in Form der Verknüpfung der ersten Prüfsumme mit dem invertierbaren Element gebildet wird, wobei die Information das invertierte Element umfasst, wobei die Verknüpfung insbesondere von dem invertierbaren Element und der abgebildeten Prüfsumme das Einselement ergibt.

Eine Implementierung des Verfahrens auf Basis eines Monoids bietet den Vorteil, dass das Verfahren sehr effizient implementiert werden kann. Es ist beispielsweise auf Systemen mit begrenzter Rechenkapazität, wie beispielsweise Chipkarten einsetzbar, sodass die Chipkarte die asymmetrische Prüfsumme erzeugen kann.

Bei weiteren Ausführungsformen des Verfahrens wird die zweite Prüfsumme mittels der Umkehrfunktion in Form der Verknüpfung des invertierten Elements mit der abgebildete Prüfsumme berechnet.

Eine Implementierung des Verfahrens auf Basis eines Monoids bietet den Vorteil, dass das Verfahren sehr effizient implementiert werden kann. Es ist beispielsweise auf Systemen mit begrenzter Rechenkapazität, wie beispielsweise Chipkarten einsetzbar, sodass die Chipkarte die asymmetrische Prüfsumme prüfen kann.

Bei weiteren Ausführungsformen des Verfahrens ist die erste Menge oder die Menge aller möglichen Prüfsummen ein Vektorraum, wobei der erste Kommunikationspartner eine invertierbare Matrix aus dem Vektorraum bildet, wobei der erste Kommunikationspartner eine invertierte Matrix aus der invertierbaren Matrix bildet, wobei die Information die invertierte Matrix umfasst, wobei die abgebildete Prüfsumme mittels der bijektiven Abbildung in Form der Matrixmultiplikation der ersten Prüfsumme mit der Matrix gebildet wird.

Eine Implementierung des Verfahrens auf Basis von Matrizen und einer Matrixmultiplikation bietet den Vorteil, dass das Verfahren extrem schnell auf Rechnerarchitekturen berechnet werden kann, die hinsichtlich Vektor und Matrizenberechnungen optimiert sind. Dies können beispielsweise Vektorrechner sein oder aber auch Grafikkarten.

Bei weiteren Ausführungsformen des Verfahrens wird die zweite Prüfsumme mittels der Umkehrfunktion in Form der Matrixmultiplikation berechnet, indem die invertierte Matrix mit der abgebildete Prüfsumme multipliziert wird.

Eine Implementierung des Verfahrens auf Basis von Matrizen und einer Matrixmultiplikation bietet den Vorteil, dass das Verfahren extrem schnell auf Rechnerarchitekturen berechnet werden kann, die hinsichtlich Vektor- und Matrizenberechnungen optimiert sind. Dies können beispielsweise Vektorrechner sein oder aber auch Grafikkarten.

Bei weiteren Ausführungsformen des Verfahrens bildet der erste Kommunikationspartner eine erste Tabelle, in der zu allen möglichen Prüfsummen jeweils eine abgebildete Prüfsumme zugeordnet wird, wobei der erste Kommunikationspartner eine zweite Tabelle bildet, in der jeweils einer abgebildete Prüfsumme eine Prüfsumme zugeordnet wird, wobei die erste Tabelle die bijektive Abbildung ist und die zweite Tabelle die Umkehrfunktion der bijektiven Abbildung ist, wobei die Informationen über eine Umkehrfunktion die zweite Tabelle umfasst.

Eine Implementierung des Verfahrens auf Basis von Tabellen erlaubt eine Ausführung des Verfahrens auf extrem rechenschwachen Systemen, wie beispielsweise RFID Chips. Die Tabellen können jeweils als Lookup-Tabellen (LUT) bzw. Umsetzungstabellen implementiert werden. Die Verwendung von Tabellen hat insbesondere den Vorteil, dass eine Berechnung einer abgebildeten Prüfsumme zur Laufzeit nicht notwendig ist.

Bei weiteren Ausführungsformen des Verfahrens wird die zweite Prüfsumme mittels der Umkehrfunktion in Form der zweiten Tabelle berechnet.

Eine Implementierung des Verfahrens auf Basis von Tabellen erlaubt eine Ausführung des Verfahrens auf extrem rechenschwachen Systemen, wie beispielsweise RFID Chips. Die Tabellen können jeweils als Lookup-Tabellen (LUT) bzw. Umsetzungstabellen implementiert werden. Die Verwendung von Tabellen hat insbesondere den Vorteil, dass eine Berechnung der zweiten Prüfsumme zur Laufzeit nicht notwendig ist.

Bei weiteren Ausführungsformen des Verfahrens wird eine abgebildete Prüfsumme als eine Ziffer oder als ein alphanumerischer Wert implementiert.

Durch die Darstellung der abgebildeten Prüfsumme als Ziffer oder als alphanumerischer Wert, lassen sich die Tabellen auf besonders einfache Weise erzeugen.

Gemäß einem weiteren Aspekt betrifft die Erfindung einen ersten Kommunikationspartner zum Erzeugen einer asymmetrischen Prüfsumme. Der erste Kommunikationspartner weist eine erste Berechnungseinrichtung und eine Sendeeinrichtung auf. Die erste Berechnungseinrichtung berechnet mit einem Prozessor eine abgebildeten Prüfsumme mittels einer bijektiven Abbildung aus einer ersten Prüfsumme, wobei die erste Prüfsumme aus der Menge aller möglichen Prüfsummen mittels einer ersten Funktion jeweils einer Nachricht aus einer Menge aller möglichen Nachrichten zugeordnet wird, wobei die erste Prüfsumme wahlweise insbesondere durch eine Abbildung der Menge aller möglichen Prüfsummen durch eine zweite Funktion auf eine erste Menge aufbereitet wird. Die Sendeeinrichtung sendet eine Information, welche eine Umkehrfunktion zu der bijektiven Abbildung definiert, an mindestens einen zweiten Kommunikationspartner verteilt, wobei mittels der Umkehrfunktion die erste Prüfsumme aus der abgebildeten Prüfsumme berechnet wird und die Sendeeinrichtung die abgebildete Prüfsumme, die erste Prüfsumme und die Nachricht an den mindestens einen zweiten Kommunikationspartner übermittelt.

Bei einer ersten Ausführungsform des ersten Kommunikationsgerätes ist das erste Kommunikationsgerät ein virtualisiertes erstes Kommunikationsgerät.

Ein virtualisiertes erstes Kommunikationsgerät hat den Vorteil, dass es sich kostengünstig in einem virtualisierten Rechnersystem einsetzten lässt und auf teure Hardware verzichtet.

Gemäß einem weiteren Aspekt betrifft die Erfindung einen zweiten Kommunikationspartner zum Prüfen einer Nachricht mittels einer asymmetrischen Prüfsumme, der eine Empfangseinrichtung und eine zweite Berechnungseinrichtung aufweist. Die Empfangseinrichtung empfängt eine Information, welche eine Umkehrfunktion zu einer bijektiven Abbildung definiert, von einem ersten Kommunikationspartner und die Empfangseinrichtung empfängt eine abgebildete Prüfsumme, eine erste Prüfsumme und eine Nachricht von dem ersten Kommunikationspartner. Die zweite Berechnungseinrichtung berechnet mit einem Prozessor eine zweite Prüfsumme mittels der Umkehrfunktion unter Verwendung der abgebildeten Prüfsumme. Die zweite Berechnungseinrichtung berechnet mit dem Prozessor eine dritte Prüfsumme über die Nachricht, wobei die dritte Prüfsumme aus der Menger aller möglichen Prüfsummen mittels einer ersten Funktion jeweils einer Nachricht aus einer Menge aller möglichen Nachrichten zugeordnet wird, wobei die dritte Prüfsumme insbesondere durch eine Abbildung der Menge aller möglichen Prüfsummen durch eine zweite Funktion auf eine erste Menge aufbereitet wird. Die zweite Berechnungseinrichtung stellt eine Korrektheit der Nachricht fest, falls die zweite Prüfsumme mit der dritten Prüfsumme eine Übereinstimmung und zusätzlich stellt die zweite Berechnungseinrichtung die Korrektheit der Nachricht fest, falls die erste Prüfsumme mir der zweiten Prüfsumme und/oder der dritten Prüfsumme eine Übereinstimmung aufweist.

Bei einer ersten Ausführungsform des zweiten Kommunikationsgerätes ist das zweite Kommunikationsgerät ein virtualisiertes zweites Kommunikationsgerät.

Ein virtualisiertes zweites Kommunikationsgerät hat den Vorteil, dass es sich kostengünstig in einem virtualisierten Rechnersystem einsetzten lässt und auf teure Hardware verzichtet.

Desweiteren wird ein integrierter Schaltkreis, beispielsweise ein FPGA oder ein ASIC, mit den genannten erfindungsgemäßen Merkmalen beansprucht. Zusätzlich wird ein integrierter Schaltkreis beansprucht, der mit Konfigurationsschritten zur Ausführung des genannten erfindungsgemäßen Verfahrens ausgerüstet wird oder mit Konfigurationsschritten derart konfiguriert ist, dass der integrierter Schaltkreis die erfindungsgemäßen Merkmale des ersten Kommunikationsgerätes oder des zweiten Kommunikationsgerätes aufweisen.

Desweiteren wird ein Computerprogrammprodukt mit Programmbefehlen zur Durchführung des genannten erfindungsgemäßen Verfahrens beansprucht. Zusätzlich wird eine Bereitstellungsvorrichtung zum Speichern und/oder Breitstellen einer Datenstruktur, die das Computerprogrammprodukt umfasst, beansprucht. Die Bereitstellungsvorrichtung ist beispielsweise ein Datenträger, der das Computerprogrammprodukt speichert und/oder bereitstellt. Alternativ ist die Bereitstellungsvorrichtung beispielsweise ein Computersystem, ein Serversystem, ein Netzwerk, ein cloudbasiertes Rechnersystem und/oder virtuellen Rechnersystem, welches das Computerprogrammprodukt speichert und/oder bereitstellt. Diese Bereitstellung erfolgt vorzugsweise als Download des vollständigen Computerprogrammprodukts, kann aber beispielsweise auch als partieller Download erfolgen, der aus mehreren Teilen besteht und insbesondere über ein Peer-to-Peer Netzwerk heruntergeladen wird. Ein solches Computerprogrammprodukt wird beispielsweise unter Verwendung der Bereitstellungsvorrichtung in Form des Datenträgers in einem System eingelesen und führt die Programmbefehle aus, sodass das erfindungsgemäße Verfahren auf einem Computer zur Ausführung gebracht wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen:

Fig. 1    ein Ablaufdiagramm eines Ausführungsbeispiels zur Erzeugung einer asymmetrischen Prüfsumme;

Fig. 2    ein Ablaufdiagramm eines Ausführungsbeispiels zum Prüfen einer asymmetrischen Prüfsumme;

Fig. 3    eine schematische Darstellung eines Ausführungsbeispiels eines ersten Kommunikationspartners;

Fig. 4    eine schematische Darstellung eines Ausführungsbeispiels eines zweiten Kommunikationspartners; und

Fig. 5    eine schematische Darstellung eines Ausführungsbeispiels eines Computersystems mit einem ersten Kommunikationspartner und einem zweiten Kommunikationspartner.

In den Figuren sind funktionsgleiche Elemente mit denselben Bezugzeichen versehen, sofern nichts anderes angegeben ist.

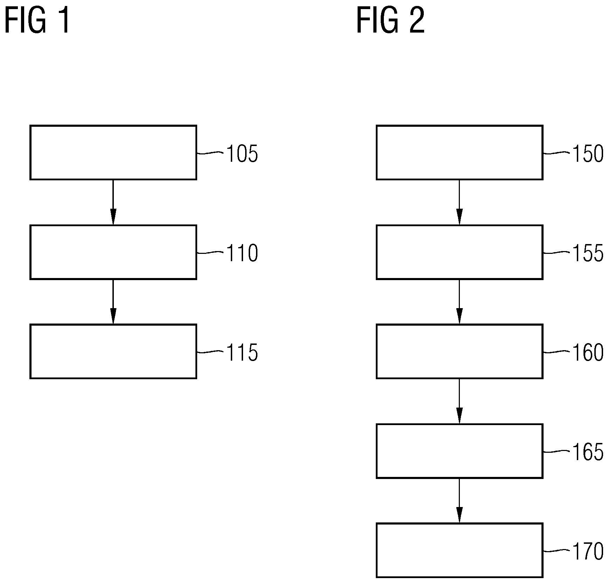

Fig. 1 ist ein Ablaufdiagramm eines Ausführungsbeispiels zur Erzeugung einer asymmetrischen Prüfsumme.

Um eine asymmetrische Prüfsumme, die auch als abgebildete Prüfsumme c' bezeichnet wird, für eine Nachricht m zu berechnen, ist zunächst mittels einer ersten Funktion $F_1$, beispielsweise einer Prüfsummenfunktion, jeder einzelnen Nachricht aus der Menge aller Nachrichten M eine Prüfsumme c aus der Menge aller Prüfsummen C zuordenbar:

$$F_1: M \rightarrow C \qquad \text{(Formel 1)}$$

Für eine Nachricht m wird somit zunächst eine erste Prüfsumme $c_1$ mittels der ersten Funktion berechnet.

Eine zweite Funktion $F_2$ bereitet in einem ersten Vorverarbeitungsschritt die erste Prüfsumme $c_1$ auf. Dieser Vorverarbeitungsschritt ist optional, also nicht zwangsläufig notwendig, hat aber den Vorteil, dass die erste Prüfsumme $c_1$ beispielsweise damit in eine Darstellung gebracht wird, für die eine bijektive Abbildung erst möglich ist. Auch kann eine Darstellung gewählt werden, bei der die bijektive Abbildung leichter berechenbar ist oder die bijektive Abbildung bestimmte vordefiniere Eigenschaften, beispielsweise mathematische Bedingungen, erfüllt. Diese Berechnungen können dann vorzugsweise durch den zweiten Kommunikationspartner ebenfalls ausgeführt werden, damit dieser die übermittelte abgebildete Prüfsumme c' prüfen kann. Einzelheiten hierzu werden in dem entsprechenden Ausführungsbeispiels der Fig. 2 erläutert.

Allgemeiner ausgedrückt wird die zweite Funktion $F_2$ verwendet, um die Menge aller möglichen Prüfsummen C auf eine erste Menge C' abzubilden, wobei hierdurch auch die erste Prüfsumme $c_1$ abgebildet wird. Folglich ist die erste Prüfsumme $c_1$ vor dem ersten Vorverarbeitungsschritt ein Element der Menge aller möglichen Prüfsummen C und nach Anwendung der zweite Funktion $F_2$ ist somit die erste Prüfsumme ein Element der ersten Menge C'. Die erste Prüfsumme $c_1$ kann nach diesem ersten Vorverarbeitungsschritt auch als eine aufbereitete erste Prüfsumme bezeichnet werden.

$$F_2: C \rightarrow C' \qquad \text{(Formel 2)}$$

In einer Variante ist die zweite Funktion $F_2$ eine Funktion, die eine 64-Bit Prüfsumme durch das Abschneiden von Bits auf eine 32-Bit Prüfsumme abbildet.

In einer weiteren Variante ist die zweite Funktion $F_2$ eine Funktion welche die Menge aller möglichen Prüfsummen C unverändert auf die erste Menge C' abbildet. Dies kann beispielsweise sinnvoll sein, um die Menge aller möglichen Prüfsummen C unverändert für weitere Berechnungen zur Verfügung zu stellen.

Mit anderen Worten ist es beispielsweise auch möglich die zweite Funktion $F_2$ immer auf die die erste Prüfsumme $c_1$ anzuwenden. In Anwendungsszenarien in denen die erste Prüfsumme $c_1$ bzw. die Menge aller möglichen Prüfsummen C unverändert bzw. unaufbereitet für weitere Berechnungsschritte bereitgestellt werden soll, kann für die zweite Funktion $F_2$ beispielsweise eine Identitätsfunktion bzw. eine identische Abbildung der Menge aller möglichen Prüfsummen C auf die ersten Menge C' gewählt werden.

Um für eine Nachricht m die abgebildete Prüfsumme c' in einem ersten Verfahrensschritt 105 durch einen ersten Kommunikationspartner zu berechnen, wird eine bijektive Abbildung G der ersten Menge C' oder der Menge aller möglichen Prüfsummen auf sich selbst verwendet. Mit anderen Worten handelt es sich bei der bijektiven Abbildung G um eine Funktion, die eine Permutation der abgebildeten Prüfsummen c' durchführt, wobei die erste Prüfsumme $c_1$ ein Eingabeparameter für die bijektive Abbildung G ist.

Damit lässt sich die abgebildete Prüfsumme c' für die erste Prüfsumme $c_1$ leicht berechnen.

$$c' = G(c_1) \qquad \text{(Formel 3)}$$

Mit Hilfe einer Umkehrfunktion $G^{-1}$ zur bijektiven Abbildung lässt sich die erste Prüfsumme $c_1$, die durch die zweite Funktion $F_2$ aufbereitet worden sein kann bzw. die aufbereitete erste Prüfsumme, wieder aus der abgebildeten Prüfsumme c' berechnen.

$$c_1 = G^{-1}(c') \qquad \text{(Formel 4)}$$

Durch die bijektive Abbildung G bzw. der asymmetrischen Prüfsumme c', wird verhindert, dass die bijektive Abbildung G dasselbe Ergebnis erzeugt wie die Umkehrfunktion $G^{-1}$ oder die Umkehrfunktion $G^{-1}$ dasselbe Ergebnis

erzeugt wie die bijektive Abbildung G. Insbesondere ist für die bijektive Abbildung G und die Umkehrfunktion $G^{-1}$ eine Involution ausgeschlossen. Mit anderen Worten wird hierdurch ausgeschlossen, dass die bijektive Abbildung G und die Umkehrfunktion $G^{-1}$ übereinstimmen. Ein Beispiel für eine solche Involution wäre eine Exklusive-Oder Verknüpfung der ersten Prüfsumme $c_1$ mit einer Konstanten a.

$$G(c_1) \;=\; c_1 \; \text{xor} \; a \qquad\qquad\qquad (\text{Formel 5})$$

Je nach Rechenmodell oder Rechnerarchitektur sind für bestimmte Varianten zur Berechnung von der bijektiven Abbildung ausgeschlossen. Insbesondere sind Berechnungen der nachfolgenden Art ausgeschlossen:

$$G(c_1) \;=\; c_1 \; + \; a \; \text{mod} \; 2^{32} \qquad\qquad\qquad (\text{Formel 6})$$

wobei mod die Modulo-Operation ist. Eine solche Berechnung der abgebildeten Prüfsumme ist deshalb problematisch, da die Umkehrfunktion $G^{-1}$ zur Formel 6

$$G^{-1}(c') \;=\; c' \; - \; a \; \text{mod} \; 2^{32} \qquad\qquad\qquad (\text{Formel 7})$$

eine Subtraktion aufweist. Dies ist insofern problematisch, da sich die Subtraktion in den meisten Rechenwerken nur durch ein Bit, also einen einfachen Schalter, von der Addition unterscheidet.

Mit anderen Worten ist für die bijektive Abbildung G und die Umkehrfunktion $G^{-1}$ vorzugsweise eine Involution ausgeschlossen. Die bijektive Abbildung G und die Umkehrfunktion $G^{-1}$ erfüllen darüber hinaus vorzugsweise die Bedingung, dass jeweils die Berechnung der bijektive Abbildung G und der Umkehrfunktion $G^{-1}$ derart unterschiedlich ist, dass triviale Bitfehler kein identisches Ergebnis für die beiden Funktionen liefern. Dies trifft insbesondere auf die Additionsoperation und die Subtraktionsoperation zu.

Damit ein zweiter Kommunikationspartner die abgebildete Prüfsumme c' verifizieren kann, wird diesem eine Information in einem zweiten Verfahrensschritt 110 bereitgestellt, welche die Umkehrfunktion $G^{-1}$ definiert. Dieses Bereitstellen kann beispielsweise zu einem früheren Zeitpunkt geschehen, sodass diese Information für viele abgebildete Prüfsummen verwendet werden kann.

In einem dritten Verfahrensschritt 115 wird dem zweiten Kommunikationspartner nun die abgebildete Prüfsumme c' und die Nachricht m übermittelt.

Fig. 2 ist ein Ablaufdiagramm eines Ausführungsbeispiels zum Prüfen einer asymmetrischen Prüfsumme. Die Berechnungsvorschriften und die mathematischen Bedingungen, die bereits in der Beschreibung zur Fig. 1 erläutert wurden, sollen auch für die nachfolgende Erläuterungen zu den Fig. 2 - 5 gelten.

Um die asymmetrische Prüfsumme durch einen zweiten Kommunikationspartner zu prüfen, wird in einem vierten Verfahrensschritt 150 die Information, welche die Umkehrfunktion $G^{-1}$ zu der bijektiven Abbildung G definiert, von dem ersten Kommunikationspartner empfangen.

In einem fünften Verfahrensschritt 155 wird dann die abgebildete Prüfsumme c' und die Nachricht m von dem ersten Kommunikationspartner empfangen.

In einem sechsten Verfahrensschritt 160 wird eine zweite Prüfsumme $c_2$ mittels der Umkehrfunktion $G^{-1}$ unter Verwendung der abgebildeten Prüfsumme c' und unter Nutzung beispielsweise eines Prozessors berechnet. Die zweite Prüfsumme $c_2$ entspricht dabei der ersten Prüfsumme $c_1$, die von der zweiten Funktion $F_2$ aufbereitet worden sein kann. Falls die zweite Funktion $F_2$ die ersten Prüfsumme $c_1$ aufbereitet hat, so ist dem zweiten Kommunikationspartner vorzugsweise die zweite Funktion $F_2$ bekannt.

In einem siebten Verfahrensschritt 165 wird dann eine dritte Prüfsumme $c_3$ über die Nachricht m berechnet. Hierzu wird vorzugsweise die erste Funktion $F_1$ verwendet, damit für die Prüfsummenberechnung jeweils über die Nachricht m der gleiche Algorithmus verwendet wird. Zusätzlich wird die zweite Funktion $F_2$ in einem zweiten Vorverarbeitungsschritt auf die dritte Prüfsumme $c_3$ angewendet, analog zur Anwendung der zweiten Funktion $F_2$ auf die erste Prüfsumme $c_1$. Der zweite Vorverarbeitungsschritt wird jedoch nur ausgeführt, wenn dieser tatsächlich notwendig ist, also der erste Vorverarbeitungsschritt bei der Erzeugung der abgebildeten Prüfsumme c' ausgeführt wurde. Die dritte Prüfsumme kann nach Anwendung der zweiten Funktion $F_2$ auch als dritte aufbereitete Prüfsumme bezeichnet werden.

In einem achten Verfahrensschritt 170 wird die Korrektheit der Nachricht m festgestellt, falls die zweite Prüfsumme $c_2$ mit der dritten Prüfsumme $c_3$ eine ausreichende Übereinstimmung aufweist.

Für die Berechnungen bzw. für die erste Funktion $F_1$ der ersten Prüfsumme $c_1$ und der dritten Prüfsumme $c_3$ wird die gleiche Prüfsummenfunktion verwendet. Ebenfalls wird für die zweite Funktion $F_2$ jeweils ebenfalls der gleiche Algorithmus verwendet, sofern der erste Vorverarbeitungsschritt bei der Erzeugung der abgebildeten Prüfsumme c' durchgeführt wurde. Die zweite Prüfsumme $c_2$ entspricht dabei der ersten Prüfsumme $c_1$.

Die Informationen über die erste Funktion $F_1$ und zweite Funktion $F_2$ können allgemein bekannt sein, über eine separate Nachricht zwischen den Kommunikationspartnern ausgetauscht werden, durch einen Administrator konfiguriert werden und/oder in der Information über die Umkehrfunktion $G^{-1}$ enthalten sein.

Der prinzipielle Ablauf des Verfahrens zwischen dem ersten Kommunikationspartner und dem zweiten Kommunikationspartner wird nachfolgend erläutert.

Auf der Seite des ersten Kommunikationspartners ist die Berechnungsvorschrift zur Bildung der bijektiven Abbildung G implementiert. Auf der Seite des zweiten Kommunikationspartners ist die Berechnungsvorschrift für die Umkehrfunktion $G^{-1}$ implementiert. Der erste Kommunikationspartner berechnet die erste Prüfsumme $c_1$ über die Nachricht m, bereitet die erste Prüfsumme $c_1$ mit der zweiten Funktion $F_2$ auf und bildet dann die zugehörige abgebildete Prüfsumme c'. Zusätzlich zur ersten Prüfsumme $c_1$ (oder, in einem Beispiel welches nicht unter dem Schutzumfang der Erfindung fällt, anstelle der ersten Prüfsumme $c_1$) wird dann die abgebildete Prüfsumme c' übermittelt.

Beim zweiten Kommunikationspartner kommt die Nachricht m und die zusätzliche die abgebildete Prüfsumme c' an. Der zweite Kommunikationspartner berechnet nun die dritte Prüfsumme $c_3$ und wendet dann die zweite Funktion $F_2$ auf dritte Prüfsumme $c_3$ an. Außerdem berechnet er die zweite Prüfsumme $c_2$, und vergleicht das Ergebnis mit der dritten Prüfsumme $c_3$. Falls keine Übertragungsfehler aufgetreten sind, sind die zweite Prüfsumme $c_2$ und die dritte Prüfsumme $c_3$ identisch. Ist zusätzlich die erste Prüfsumme $c_1$ mit übertragen worden, stimmt auch die erste Prüfsumme $c_1$ mit der zweiten Prüfsumme $c_2$ überein, sofern die abgebildete Prüfsumme c' fehlerfrei übertragen wurde.

Falls ein Übertragungsfehler aufgetreten ist, sind die zweite Prüfsumme $c_2$ und die dritte Prüfsumme $c_3$ mit hoher Wahrscheinlichkeit nicht gleich.

Da dem zweiten Kommunikationspartner die bijektive Abbildung G nicht bekannt ist, kann der zweite Kommunikationspartner die erste Prüfsumme $c_1$ nicht berechnen, und deshalb nicht versehentlich eine falsche Prüfsumme verwenden (oder sogar weiterverschicken), ohne dass das später bemerkt wird.

Anders als bei kryptographischen Verfahren ist es dabei für den genannten Anwendungszweck unerheblich, ob die bijektive Abbildung G aus der Umkehrfunktion $G^{-1}$ effizient berechnet werden kann. Es reicht aus, dass die Berechnung von der bijektiven Abbildung G aus der Umkehrfunktion $G^{-1}$ hinreichend nichttrivial ist, beispielsweise einen Algorithmus benötigt, der auf Seite des zweiten Kommunikationspartners nicht implementiert ist, so dass diese Berechnung nicht "versehentlich" durchgeführt werden kann.

In einer Variante der beschriebenen Ausführungsbeispiele wird die bijektive Abbildung G und die Umkehrfunktion $G^{-1}$ mittels einer Monoid-Verknüpfung implementiert.

Die erste Menge C' ist dabei ein Monoid, also eine Halbgruppe mit neutralem Element 1 und Verknüpfung "*". Falls die zweite Funktion $F_2$ nicht auf die Menge aller Prüfsummen C angewendet wurde, ist das Monoid die Menge aller Prüfsummen C.

Der erste Kommunikationspartner wählt ein invertierbares Element a des Monoids, wobei gilt

$$a \; * \; a_{inv} \; = \; 1 \qquad\qquad (Formel\ 8)$$

wobei $a_{inv}$ das invertierte Element zu dem invertierbaren Element a ist. Der erste Kommunikationspartner verteilt das invertierte Element $a_{inv}$ an den zweiten Kommunikationspartner, und behält das invertierbare Element a.

Die bijektive Abbildung ist dann gegeben durch

$$G(c_1) \; = \; c_1 \; * \; a \qquad\qquad (Formel\ 9)$$

Und die Umkehrfunktion $G^{-1}$ ist gegeben durch

$$G^{-1}(c´) \; = \; c´ \; * \; a_{inv} \qquad\qquad (Formel\ 10)$$

Nachfolgend wird eine mögliche Implementierung mittels eines Monoids im Einzelnen erläutert.

Im Folgenden sei das Monoid gegeben durch die Menge {0x0, 0x1, 0x2, ..., Oxffffffff} zusammen mit der Multiplikation modulo 0x100000000. Diese modulare Multiplikation lässt sich sehr effizient implementieren, da vom Resultat der normalen Multiplikation einfach die niederwertigsten 32 Bit verwendet werden.

In diesem Monoid ist jede ungerade Zahl invertierbar. Sei also beispielsweise das invertierbare Element a = 0xc0c17487, dann ist das invertierte Element $a_{inv}$ = 0xa4751137. Dies kann beispielsweise mit Hilfe des Euklidschen Algorithmus berechnet werden. Das Produkt des invertierbaren Elements a und des invertierten Elements $a_{inv}$ ist

$$a \bullet a_{inv} = \texttt{0x7bd4140700000001}$$
$$= \texttt{1 mod 0x100000000} \qquad \text{(Formel 11)}$$

wobei "•" die Multiplikation ganzer Zahlen ist.

Weiter sei die erste Funktion $F_1$ eine Prüfsummenfunktion, beispielsweise die CRC32 Funktion. Hier ist es möglich als zweite Funktion $F_2$ die identische Abbildung zu wählen, weil die Bildmenge von CRC32 mit dem Monoid übereinstimmt.

Sei nun beispielsweise die erste Prüfsumme $c_1 = \texttt{0x82441710}$ die CRC32-Prüfsumme einer geeigneten Nachricht m, auf die zusätzlich die zweite Funktion $F_2$ angewendet wurde, so ist die abgebildete Prüfsumme c' definiert durch

$$\texttt{c' = c * a = 0xef6b6970} \qquad \text{(Formel 12)}$$

Diese Zahl wird an den zweiten Kommunikationspartner zusammen mit der Nachricht m übermittelt.

Der Zweite Kommunikationspartner berechnet nun die dritte Prüfsumme $c_3$ mit Hilfe der CRC 32 Funktion über die Nachricht m und wendet anschließend die zweite Funktion $F_2$ auf diese an. Zusätzlich wird die zweite Prüfsumme $c_2$ berechnet:

$$\texttt{c}_2 \texttt{ = c' * a}_{inv} \texttt{ = 0x82441710} \qquad \text{(Formel 13)}$$

Stimmen die zweite Prüfsumme $c_2$ und die dritte Prüfsumme $c_3$ überein, wird die Nachricht m als fehlerfrei angesehen. Die abgebildete Prüfsumme c' könnte der zweite Kommunikationspartner jedoch nicht selbst berechnen, weil er das invertierbare Element a nicht kennt, und der Euklidsche Algorithmus nicht implementiert ist.

Neben der oben beschriebenen Multiplikation modulo einer Potenz von 2 zur Konstruktion des Monoid wäre beispielsweise auch eine Multiplikation modulo einer Primzahl p denkbar. Das sich ergebende Monoid ist dann eine Gruppe, sofern die 0 ausgeschlossen wird. Daraus folgt, dass jedes Element invertierbar ist. Die Berechnung des Inversen erfolgt wieder mit Hilfe des Euklidschen Algorithmus. Da die Primzahl p eine Konstante ist, lässt sich die modulare Multiplikation effizient implementieren, beispielsweise durch Vorberechnung von 1/p in hinreichender Genauigkeit, wodurch die Division sich zu einer Multiplikation vereinfacht.

In einer Variante der beschriebenen Ausführungsbeispiele wird die bijektive Abbildung G und die Umkehrfunktion $G^{-1}$ mittels Matrizen und der Matrixmultiplikation implementiert.

Die erste Menge C' oder die Menge aller Prüfsummen C ist ein Vektorraum und der erste Kommunikationspartner bildet eine invertierbare Matrix A aus dem Vektorraum.

$$\texttt{A = C' * C'} \qquad \text{(Formel 14)}$$

Der erste Kommunikationspartner berechnet eine invertierte Matrix $A^{-1}$ zu der invertierbaren Matrix A und verteilt diese an den zweiten Kommunikationspartner.

Die bijektive Abbildung ist dann gegeben durch

$$\texttt{G(c}_1\texttt{) = A * c}_1 \qquad \text{(Formel 15)}$$

wobei "*" die Matrixmultiplikation ist.

Und die Umkehrfunktion $G^{-1}$ ist gegeben durch

$$\texttt{G}^{-1}\texttt{(c') = A}^{-1}\texttt{ * c'} \qquad \text{(Formel 16)}$$

In einer weiteren Variante der beschriebenen Ausführungsbeispiele wird die bijektive Abbildung G und die Umkehrfunktion $G^{-1}$ mittels Tabellen implementiert.

Die bijektive Abbildung G bzw. die abgebildete Prüfsumme c' wird hierbei durch eine erste Tabelle gebildet, in der zu jeder Prüfsumme c ein passender Wert zu seiner bijektiven Abbildung G bzw. G(c) gespeichert ist. Auch hier können die Prüfsummen durch die zweite Funktion $F_2$ aufbereitet worden sein, bevor diese weiterverarbeitet werden. Die erste Prüfsumme $c_1$ wird als ein Eingangswert beispielsweise für eine Umsetzungstabelle verwendet, um die abgebildete Prüfsumme c' zu berechnen. Die Umkehrfunktion $G^{-1}$ bzw. die zweite Prüfsumme $c_2$ wird durch eine zweite Tabelle berechnet, die zu jeder abgebildeten Prüfsumme die passende Prüfsumme enthält. Mit anderen Worten wird die abgebildete Prüfsumme c' als Eingangswert für die zweite Tabelle verwendet, um die zweite Prüfsumme $c_2$ zu erhalten.

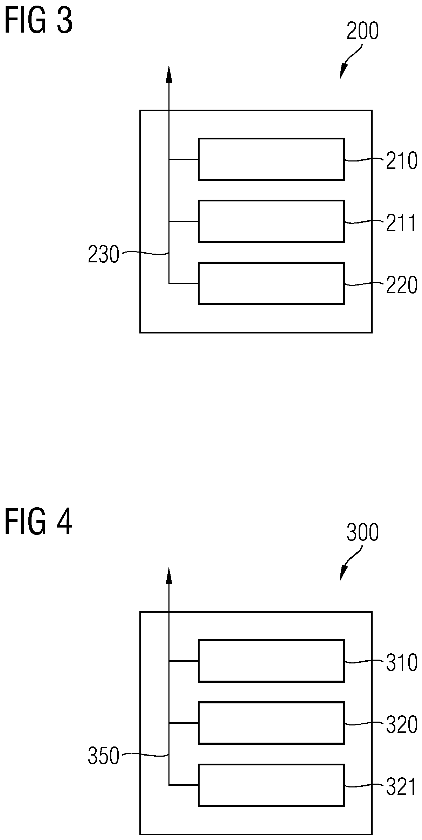

Fig. 3 ist eine schematische Darstellung eines Ausführungsbeispiels eines ersten Kommunikationspartners 200, der auch als Erzeugungsgerät oder Sender bezeichnet wird. Das Erzeugungsgerät weist eine erste Berechnungseinrichtung 210 und eine Sendeeinrichtung 220 auf, die über einen Bus 230 kommunikativ miteinander verbunden sind.

Die erste Berechnungseinrichtung 210 berechnet mit einem Prozessor 211 eine abgebildete Prüfsumme mittels einer bijektiven Abbildung aus einer ersten Prüfsumme, wobei die erste Prüfsumme aus der Menge aller möglichen Prüfsummen mittels einer ersten Funktion jeweils einer Nachricht aus einer Menge aller möglichen Nachrichten zugeordnet wird, wobei die erste Prüfsumme insbesondere durch eine Abbildung der Menge aller möglichen Prüfsummen durch eine zweite Funktion auf eine erste Menge aufbereitet wird.

Die Sendeeinrichtung 220, verteilt eine Information, welche eine Umkehrfunktion zu der bijektiven Abbildung definiert, an mindestens einen zweiten Kommunikationspartner, der auch als Verifizierer oder Verifizierergerät bezeichnet wird, wobei mittels der Umkehrfunktion die erste Prüfsumme aus der abgebildeten Prüfsumme berechnet wird. Die Sendeeinrichtung 220 übermittelt zusätzlich die abgebildete Prüfsumme und die Nachricht an den mindestens einen zweiten Kommunikationspartner.

Fig. 4 ist eine schematische Darstellung eines Ausführungsbeispiels eines zweiten Kommunikationspartners 300, der auch als Sender, Verifizierer oder Verifizierergerät bezeichnet wird. Das Verifizierergerät weist eine Empfangseinrichtung 310 und eine zweite Berechnungseinrichtung 320 auf, die über einen Bus 350 kommunikativ miteinander verbunden sind.

Die Empfangseinrichtung 310, empfängt eine Information, welche eine Umkehrfunktion zu einer bijektiven Abbildung definiert, von einem ersten Kommunikationspartner, der auch als Erzeugungsgerät bezeichnet wird. Zusätzlich empfängt die Empfangseinrichtung 310 eine abgebildete Prüfsumme und eine Nachricht von dem ersten Kommunikationspartner.

Die zweite Berechnungseinrichtung 320 berechnet mit einem Prozessor 321 eine zweite Prüfsumme mittels der Umkehrfunktion unter Verwendung der abgebildeten Prüfsumme.

Die zweite Berechnungseinrichtung 320 berechnet zusätzlich vorzugsweise mit dem Prozessor 321 eine dritte Prüfsumme über die Nachricht, wobei die dritte Prüfsumme aus der Menger aller möglichen Prüfsummen mittels einer ersten Funktion jeweils einer Nachricht aus einer Menge aller möglichen Nachrichten zugeordnet wird, wobei die dritte Prüfsumme insbesondere durch eine Abbildung der Menge aller möglichen Prüfsummen durch eine zweite Funktion auf eine erste Menge aufbereitet wird.

Darüber hinaus stellt die zweite Berechnungseinrichtung 320 eine Korrektheit der Nachricht fest, falls die zweite Prüfsumme mit der dritten Prüfsumme eine ausreichende Übereinstimmung aufweist.

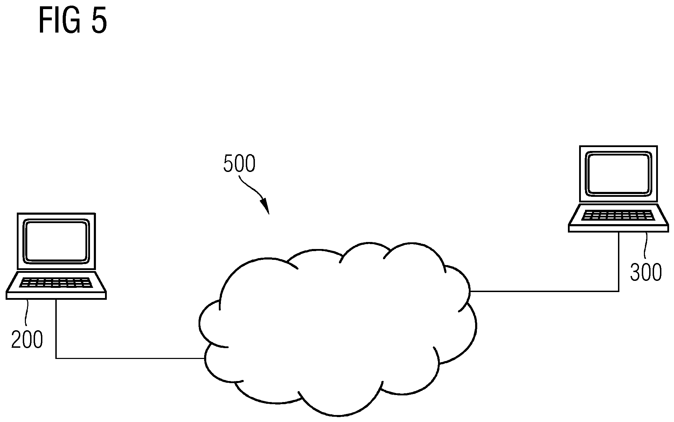

Fig. 5 ist eine schematische Darstellung eines Ausführungsbeispiels eines Computersystems 500.

Das Computersystem 500 umfasst einen ersten Kommunikationspartner 200 entsprechend der Beschreibung zu Fig. 3 beispielsweise in Form eines ersten Computers, beispielsweise ein IBM-kompatibler Personal Computer mit einem Linux-Betriebssystem. Der erste Kommunikationspartner 200 ist über ein Netzwerk, beispielsweise ein Ethernet Netzwerk oder ein Tokenring Netzwerk, mit einem zweiten Kommunikationspartner 300 entsprechend der Beschreibung zu Fig. 4 in Form eines zweiten Computers, beispielsweise einen Apple iMac®, verbunden.

Der erste Kommunikationspartner 200 und der zweite Kommunikationspartner 300 umfassen beispielsweise jeweils marktübliche Hardwarekomponenten, wie ein Anzeigegerät vorzugsweise in Form eines TFT Monitors, insbesondere mindestens ein Eingabegerät vorzugsweise in Form einer Computermaus und/oder einer Tastatur, mindestens einen Datenträger vorzugsweise in Form einer Solid-State Festplatte und/oder eines DVD-Lese- und/oder Schreiblaufwerkes, einen Prozessor, vorzugsweise einen Intel x86 kompatiblen Prozessor, eine Netzwerkschnittstelle, vorzugsweise eine Ethernet-Schnittstelle, Arbeitsspeicher, vorzugsweise DDR SDRAM (Double Data Rate Synchronous Dynamic Random Access Memory), und/oder weitere dem Fachmann bekannten Hardware oder Peripheriegeräten.

Die Hardwarekomponenten des ersten Kommunikationspartners 200 sind beispielsweise über eine Hauptplatine und einen Datenbus miteinander kommunikativ verbunden. Die Hardwarekomponenten des zweiten Kommunikationspartners 300 sind ebenfalls beispielsweise über eine Hauptplatine und einen Datenbus miteinander kommunikativ verbunden. Die jeweiligen Hauptplatinen des ersten Kommunikationspartners 200 und des zweiten Kommunikationspartners 300 verfügt vorzugsweise über mindestens einen Steckplatz oder andere Schnittstellen, beispielsweise eine Universal Serial Bus (USB) oder eine FireWire Schnittstelle, zur Verbindung von einem Peripheriegerät über den Datenbus mit dem Prozessor. Der Steckplatz ist vorzugsweise als Peripheral Component Interconnect Express Bus (PCIe) ausgebildet.

Das Verfahren, das in der Beschreibung zu Fig. 2 und Fig. 3 erläutert wurde, wird beispielsweise durch eine Vorrichtung oder mehrere Vorrichtungen implementiert, die als Steckkarte oder USB Gerät ausgebildet sind. Diese Steckkarte ist beispielsweise in den Steckplatz eingesetzt und weist somit eine kommunikative Verbindung mit den Hardwarekomponenten und/oder weiterer Peripherie auf.

In einer Variante wird das Verfahren durch Programmcode implementiert, der durch den Prozessor ausgeführt wird.

In einer weiteren Variante führt beispielsweise der erste Kommunikationspartner 200 mindestens einen virtualisierten Computer aus, der eine virtualisierte Steckkarte aufweist, die das Verfahren implementiert, oder das Verfahren durch Programmcode implementiert, der durch den virtualisierten Prozessor ausgeführt wird.

In einer weiteren Variante wird das Verfahren beispielsweise durch einen Terminalserver mittels einer Steckkarte oder Programmcode implementiert, wobei der Terminalserver ebenfalls ein virtualisierter Terminalserver sein kann. Der Terminalserver bedient dann einen Terminalclient, sodass ein Nutzer oder ein anderes Programm das Verfahren ausführen kann.

In einer weiteren Variante ist der erste Kommunikationspartner ein erster Prozess oder ein erstes Programm und der zweite Kommunikationspartner ist ein zweiter Prozess oder ein zweites Programm, das auf einem Computer ausgeführt wird.

In einer weiteren Variante ist ein integrierter Schaltkreis, beispielsweise ein FPGA oder ein ASIC, mittels Programmbefehlen in einen Zustand versetzt, in einen Zustand bringbar, um das erfindungsgemäße Verfahren auszuführen.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum rechnergestützten Erstellen und Übermitteln einer asymmetrischen Prüfsumme für eine Nachricht (m) durch einen ersten Kommunikationspartner (200), bei dem ein Prozessor (211) die folgenden Verfahrensschritte ausführt:

   - Berechnen (105) der asymmetrischen Prüfsumme (c') aus einer ersten Prüfsumme ($c_1$) mittels einer bijektiven Abbildung (G) einer ersten Menge (C') wobei
   - die erste Prüfsumme ($c_1$) aus einer Menge aller möglichen Prüfsummen (C) mittels einer ersten Funktion ($F_1$) der Nachricht (m) aus einer Menge aller möglichen Nachrichten (M) zugeordnet wird,
   - die erste Prüfsumme ($c_1$) insbesondere durch eine Abbildung der Menge aller möglichen Prüfsummen (C) durch eine zweite Funktion ($F_2$) auf die erste Menge (C') aufbereitet wird;
   - Verteilen (110) von einer Information, welche eine Umkehrfunktion ($G^{-1}$) zu der bijektiven Abbildung (G) definiert, an mindestens einen zweiten Kommunikationspartner (300), wobei mittels der Umkehrfunktion ($G^{-1}$) die erste Prüfsumme ($c_1$) aus der asymmetrischen Prüfsumme (c') berechnet wird; und
   - Übermitteln (115) der asymmetrischen Prüfsumme (c') und der Nachricht (m) an den mindestens einen zweiten Kommunikationspartner (300);

   **dadurch gekennzeichnet, dass** zusätzlich zur Nachricht (m) und der asymmetrischen Prüfsumme (c'), die erste Prüfsumme ($c_1$) an den zweiten Kommunikationspartner (300) gesendet wird.

2. Verfahren nach Anspruch 1, wobei das Berechnen der asymmetrischen Prüfsumme (c') ein Geheimnis bildet, das dem ersten Kommunikationspartner (200) bekannt ist.

3. Verfahren nach einem der vorhergehenden Ansprüche, wobei

   - das Aufbereiten der erste Prüfsumme ($c_1$) mit der zweiten Funktion ($F_2$) in einem ersten Vorverarbeitungsschritt vor dem Berechnen der asymmetrischen Prüfsumme (c') durchgeführt wird, und
   - die bijektiven Abbildung (G) insbesondere eine Abbildung der ersten Menge (C') auf sich selbst ist.

4. Verfahren zum rechnergestützten Prüfen einer Nachricht mittels einer asymmetrischen Prüfsumme durch einen zweiten Kommunikationspartner (300), bei dem ein Prozessor (321) zum Ausführen der folgenden Schritte programmiert ist:

   - Empfangen (150) einer Information, welche eine Umkehrfunktion ($G^{-1}$) zu einer bijektiven Abbildung (G) einer ersten Menge (C') definiert, von einem ersten Kommunikationspartner (200);
   - Empfangen (155) der asymmetrischen Prüfsumme (c') und der Nachricht (m) von einem ersten Kommunikationspartner (200);

- Berechnen (160) einer zweiten Prüfsumme ($c_2$) mittels der Umkehrfunktion ($G^{-1}$) unter Verwendung der asymmetrischen Prüfsumme (c');
- Berechnen (165) einer dritten Prüfsumme ($c_3$) über die Nachricht (m), wobei

- die dritte Prüfsumme ($c_3$) aus der Menger aller möglichen Prüfsummen (C) mittels einer ersten Funktion ($F_1$) der Nachricht (m) aus einer Menge aller möglichen Nachrichten (M) zugeordnet wird,
- die dritte Prüfsumme ($c_3$) insbesondere durch eine Abbildung der Menge aller möglichen Prüfsummen (C) durch eine zweite Funktion ($F_2$) auf die erste Menge (C') aufbereitet wird; und

- Feststellen (170) einer Korrektheit der Nachricht (m), falls die zweite Prüfsumme ($c_2$) mit der dritten Prüfsumme ($c_3$) eine Übereinstimmung aufweist;

**dadurch gekennzeichnet, dass** zusätzlich zur Nachricht (m) und der asymmetrischen Prüfsumme (c'), eine erste Prüfsumme ($c_1$) vom ersten Kommunikationspartner empfangen wird, wobei die erste Prüfsumme ($c_1$) zusätzlich mit der zweiten Prüfsumme ($c_2$) und/oder der dritten Prüfsumme ($c_3$) verglichen wird, und wobei die Korrektheit der Nachricht (m) festgestellt wird, falls die erste Prüfsumme ($c_1$) mit der zweiten Prüfsumme ($c_2$) und/oder der dritten Prüfsumme ($c_3$) eine Übereinstimmung aufweist.

5. Verfahren nach einem der vorhergehenden Ansprüche, wobei

- das Aufbereiten der dritten Prüfsumme ($c_3$) mit der zweiten Funktion ($F_2$) in einem zweiten Vorverarbeitungsschritt vor dem Feststellen der Korrektheit der Nachricht (m) durchgeführt wird,
- die bijektiven Abbildung (G) insbesondere eine Abbildung der ersten Menge (C') auf sich selbst ist.

6. Verfahren nach Anspruch 5, wobei

- die zweite Prüfsumme ($c_2$) der ersten Prüfsumme ($c_1$) entspricht, die jeweils von der zweiten Funktion ($F_2$) aufbereitet wurde, und
- die erste Prüfsumme ($c_1$) und die dritte Prüfsumme ($c_3$) insbesondere jeweils ein Element der ersten Menge (C') sind.

7. Verfahren nach einem der vorhergehenden Ansprüche, wobei die zweite Funktion ($F_2$) eine 64-Bit Prüfsumme auf eine 32-Bit Prüfsumme abbildet oder die Identität ist.

8. Verfahren nach einem der vorhergehenden Ansprüche, wobei

- die erste Menge (C') oder die Menge aller möglichen Prüfsummen (C) ein Monoid ist,
- das Monoid als neutrales Element das Einselement umfasst und für das Monoid eine Operation einer Verknüpfung definiert ist,
- der erste Kommunikationspartner (200) ein invertierbares Element (a) des Monoids auswählt;
- der erste Kommunikationspartner (200) ein invertiertes Element ($a_{inv}$) zu dem invertierbaren Element (a) berechnet;
- die abgebildete Prüfsumme (c') mittels der bijektiven Abbildung (G) in Form der Verknüpfung der ersten Prüfsumme ($c_1$) mit dem invertierbaren Element (a) gebildet wird,
- die Information das invertierte Element ($a_{inv}$) umfasst; und
- die Verknüpfung insbesondere von dem invertierbaren Element (a) und der asymmetrischen Prüfsumme (c') das Einselement ergibt.

9. Verfahren nach Anspruch 8, wobei die zweite Prüfsumme ($c_2$) mittels der Umkehrfunktion ($G^{-1}$) in Form der Verknüpfung des invertierten Elements ($a_{inv}$) mit der asymmetrischen Prüfsumme (c') berechnet wird.

10. Verfahren nach einem der Ansprüche 1 - 7, wobei

- die erste Menge (C') oder die Menge aller möglichen Prüfsummen (C) ein Vektorraum ist;
- der erste Kommunikationspartner (200) eine invertierbare Matrix (A) aus dem Vektorraum bildet;
- der erste Kommunikationspartner (200) eine invertierte Matrix ($A^{-1}$) aus der invertierbaren Matrix (A) bildet;
- die Information die invertierte Matrix ($A^{-1}$) umfasst; und
- die asymmetrische Prüfsumme (c') mittels der bijektiven Abbildung (G) in Form der Matrixmultiplikation der

ersten Prüfsumme ($c_1$) mit der Matrix (A) gebildet wird.

11. Verfahren nach Anspruch 10, wobei die zweite Prüfsumme ($c_2$) mittels der Umkehrfunktion ($G^{-1}$) in Form der Matrixmultiplikation berechnet wird, indem die invertierte Matrix ($A^{-1}$) mit der asymmetrische Prüfsumme (c') multipliziert wird.

12. Verfahren nach einem der Ansprüche 1 - 7, wobei

- der erste Kommunikationspartner (200) eine erste Tabelle bildet, in der zu allen möglichen Prüfsummen (C) jeweils eine asymmetrische Prüfsumme (c') zugeordnet wird;
- der erste Kommunikationspartner (200) eine zweite Tabelle bildet, in der jeweils einer asymmetrische Prüfsumme (c') eine Prüfsumme zugeordnet wird;
- die erste Tabelle die bijektive Abbildung (G) ist und die zweite Tabelle die Umkehrfunktion ($G^{-1}$) der bijektiven Abbildung ist; und
- die Information über eine Umkehrfunktion die zweite Tabelle umfasst.

13. Verfahren nach Anspruch 12, wobei die zweite Prüfsumme ($c_2$) mittels der Umkehrfunktion ($G^{-1}$) in Form der zweiten Tabelle berechnet wird.

14. Verfahren nach Anspruch 12 oder 13, wobei die asymmetrische Prüfsumme (c') als eine Ziffer oder als ein alphanumerischer Wert implementiert wird.

15. Erster Kommunikationspartner (200) zum Erstellen und Übermitteln einer asymmetrischen Prüfsumme für eine Nachricht, aufweisend:

- eine erste Berechnungseinrichtung, die mit einem Prozessor (211) die asymmetrische Prüfsumme (c') aus einer ersten Prüfsumme ($c_1$) mittels einer bijektiven Abbildung (G) einer ersten Menge (C') berechnet, wobei

- die erste Prüfsumme ($c_1$) aus der Menge aller möglichen Prüfsummen (C) mittels einer ersten Funktion ($F_1$) der Nachricht (m) aus einer Menge aller möglichen Nachrichten (M) zugeordnet wird,
- die erste Prüfsumme ($c_1$) insbesondere durch eine Abbildung der Menge aller möglichen Prüfsummen (C) durch eine zweite Funktion ($F_2$) auf die erste Menge (C') aufbereitet wird;

- eine Sendeeinrichtung (220), die

- eine Information, welche eine Umkehrfunktion ($G^{-1}$) zu der bijektiven Abbildung (G) definiert, an mindestens einen zweiten Kommunikationspartner (300) verteilt, wobei mittels der Umkehrfunktion ($G^{-1}$) die erste Prüfsumme ($c_1$) aus der asymmetrischen Prüfsumme (c') berechnet wird; und
- die asymmetrische Prüf summe (c') und die Nachricht (m) an den mindestens einen zweiten Kommunikationspartner (300) übermittelt **dadurch gekennzeichnet, dass** die Sendeeinrichtung, zusätzlich zur asymmetrischen Prüfsumme (c') und der Nachricht (m), die erste Prüfsumme ($c_1$) an den mindestens einen zweiten Kommunikationspartner (300) sendet.

16. Erster Kommunikationspartner (200) nach Anspruch 15, wobei der erste Kommunikationspartner (200) ein virtualisiertes erstes Kommunikationsgerät ist.

17. Zweiter Kommunikationspartner (300) zum Prüfen einer Nachricht mittels einer asymmetrischen Prüfsumme, aufweisend:

- eine Empfangseinrichtung (310), die

- eine Information, welche eine Umkehrfunktion ($G^{-1}$) zu einer bijektiven Abbildung (G) einer ersten Menge (C') definiert, von einem ersten Kommunikationspartner empfängt;
- die asymmeterische Prüfsumme (c') und die Nachricht (m) von dem ersten Kommunikationspartner empfängt;

- eine zweite Berechnungseinrichtung (320), die mit einem Prozessor (321)
- eine zweite Prüfsumme ($c_2$) mittels der Umkehrfunktion ($G^{-1}$) unter Verwendung der asymmetrischen Prüfsumme (c') berechnet;
- eine dritte Prüfsumme ($c_3$) über die Nachricht (m) berechnet, wobei

- die dritte Prüfsumme ($c_3$) aus der Menger aller möglichen Prüfsummen (C) mittels einer ersten Funktion ($F_1$) der Nachricht (m) aus einer Menge aller möglichen Nachrichten (M) zugeordnet wird,
- die dritte Prüfsumme ($c_3$) insbesondere durch eine Abbildung der Menge aller möglichen Prüfsummen (C) durch eine zweite Funktion ($F_2$) auf eine erste Menge (C') aufbereitet wird; und
- eine Korrektheit der Nachricht (m) feststellt, falls die zweite Prüfsumme ($c_2$) mit der dritten Prüfsumme ($c_3$) eine Übereinstimmung aufweist, **dadurch gekennzeichnet, dass** die Empfangseinrichtung zusätzlich zur Nachricht (m) und der asymmetrischen Prüfsumme (c'), eine erste Prüfsumme ($c_1$) vom ersten Kommunikationspartner empfängt und die zweite Berechnungseinrichtung zusätzlich die erste Prüfsumme ($c_1$) mit der zweiten Prüfsumme ($c_2$) und/oder der dritten Prüfsumme ($c_3$) vergleicht und die Korrektheit der Nachricht (m) festgestellt wird, falls die erste Prüfsumme ($c_1$) mit der zweiten Prüfsumme ($c_2$) und/oder der dritten Prüfsumme ($c_3$) eine Übereinstimmung aufweist.

18. Zweiter Kommunikationspartner (300) nach Anspruch 17, wobei der zweite Kommunikationspartner (300) ein virtualisiertes zweites Kommunikationsgerät ist.

19. Computersystem (500), aufweisend

- ein erstes Kommunikationsgerät (200) nach Anspruch 15 oder 16, und
- ein zweites Kommunikationsgerät (300) nach Anspruch 17 oder 18.

20. Integrierter Schaltkreis, der mit Konfigurationsschritten zur Durchführung des Verfahrens nach einem der Ansprüche 1-14 ausgerüstet wird oder mit Konfigurationsschritten derart konfiguriert ist, dass der integrierte Schaltkreis die Merkmale des ersten Kommunikationsgerätes nach Anspruch 15 oder 16, oder des zweiten Kommunikationsgerätes nach Anspruch 17 oder 18 aufweist.

21. Computerprogrammprodukt mit Programmbefehlen zur Durchführung des Verfahrens nach einem der Ansprüche 1-14.

22. Bereitstellungsvorrichtung für das Computerprogrammprodukt nach Anspruch 21, wobei die Bereitstellungsvorrichtung das Computerprogrammprodukt speichert und/oder bereitstellt.

**Claims**

1. Method for a first communication partner (200) to create and transmit an asymmetric checksum for a message (m) on a computer-aided basis, in which a processor (211) carries out the following method steps:

- computing (105) the asymmetric checksum (c') from a first checksum ($c_1$) by means of a bijective mapping (G) of a first set (C'), wherein

- the first checksum ($c_1$) is assigned from a set of all possible checksums (C) to the message (m) from a set of all possible messages (M) by means of a first function ($F_1$) ,
- the first checksum ($c_1$) is conditioned in particular by virtue of a second function ($F_2$) mapping the set of all possible checksums (C) onto the first set (C');

- distributing (110) a piece of information that defines an inverse function ($G^{-1}$) for the bijective mapping (G) to at least one second communication partner (300), wherein the inverse function ($G^{-1}$) is used to compute the first checksum ($c_1$) from the asymmetric checksum (c'); and
- transmitting (115) the asymmetric checksum (c') and the message (m) to the at least one second communication partner (300);

**characterized in that** in addition to the message (m) and the asymmetric checksum (c') the first checksum ($c_1$) is sent to the second communication partner (300).

2. Method according to Claim 1, wherein the computing of the asymmetric checksum (c') forms a secret that is known to the first communication partner (200).

3. Method according to one of the preceding claims, wherein

- the conditioning of the first checksum ($c_1$) using the second function ($F_2$) is performed in a first preprocessing step before the computing of the asymmetric checksum (c'), and
- the bijective mapping (G) is in particular a mapping of the first set (C') onto itself.

4. Method for a second communication partner (300) to check a message by means of an asymmetric checksum on a computer-aided basis, in which a processor (321) is programmed to carry out the following steps:

- receiving (150) a piece of information that defines an inverse function ($G^{-1}$) for a bijective mapping (G) of a first set (C') from a first communication partner (200);
- receiving (155) the asymmetric checksum (c') and the message (m) from a first communication partner (200);
- computing (160) a second checksum ($c_2$) by means of the inverse function ($G^{-1}$) using the asymmetric checksum (c');
- computing (165) a third checksum ($c_3$) for the message (m), wherein

  - the third checksum ($c_3$) is assigned from the set of all possible checksums (C) to the message (m) from a set of all possible messages (M) by means of a first function ($F_1$) ,
  - the third checksum ($c_3$) is conditioned in particular by virtue of a second function ($F_2$) mapping the set of all possible checksums (C) onto the first set (C'); and

- establishing (170) a correctness of the message (m) if the second checksum ($c_2$) has a match with the third checksum ($c_3$);

**characterized in that** in addition to the message (m) and the asymmetric checksum (c') a first checksum ($c_1$) is received from the first communication partner, wherein the first checksum ($c_1$) is additionally compared with the second checksum ($c_2$) and/or the third checksum ($c_3$), and wherein the correctness of the message (m) is established if the first checksum ($c_1$) has a match with the second checksum ($c_2$) and/or the third checksum ($c_3$) .

5. Method according to one of the preceding claims, wherein

- the conditioning of the third checksum ($c_3$) using the second function ($F_2$) is performed in a second preprocessing step before the establishing of the correctness of the message (m),
- the bijective mapping (G) is in particular a mapping of the first set (C') onto itself.

6. Method according to Claim 5, wherein

- the second checksum ($c_2$) corresponds to the first checksum ($c_1$) that has been conditioned by the second function ($F_2$) in each case, and
- the first checksum ($c_1$) and the third checksum ($c_3$) are in particular each an element of the first set (C').

7. Method according to one of the preceding claims, wherein the second function ($F_2$) maps a 64-bit checksum onto a 32-bit checksum or is the identity.

8. Method according to one of the preceding claims, wherein

- the first set (C') or the set of all possible checksums (C) is a monoid,
- the monoid comprises the identity element as neutral element and an operation of a logic combination is defined for the monoid,
- the first communication partner (200) selects an invertible element (a) of the monoid;
- the first communication partner (200) computes an inverted element ($a_{inv}$) for the invertible element (a);
- the mapped checksum (c') is formed by means of the bijective mapping (G) in the form of the logic combination of the first checksum ($c_1$) with the invertible element (a),
- the information comprises the inverted element ($a_{inv}$); and
- the logic combination of in particular the invertible element (a) and the asymmetric checksum (c') results in the identity element.

9. Method according to Claim 8, wherein the second checksum ($c_2$) is computed by means of the inverse function ($G^{-1}$) in the form of the logic combination of the inverted element ($a_{inv}$) with the asymmetric checksum (c').

10. Method according to one of Claims 1 - 7, wherein

- the first set (C') or the set of all possible checksums (C) is a vector space;
- the first communication partner (200) forms an invertible matrix (A) from the vector space;
- the first communication partner (200) forms an inverted matrix ($A^{-1}$) from the invertible matrix (A);
- the information comprises the inverted matrix ($A^{-1}$) ; and
- the asymmetric checksum (c') is formed by means of the bijective mapping (G) in the form of the matrix multiplication of the first checksum ($c_1$) by the matrix (A) .

11. Method according to Claim 10, wherein the second checksum ($c_2$) is computed by means of the inverse function ($G^{-1}$) in the form of the matrix multiplication by virtue of the inverted matrix ($A^{-1}$) being multiplied by the asymmetric checksum (c').

12. Method according to one of Claims 1 - 7, wherein

- the first communication partner (200) forms a first table in which an asymmetric checksum (c') is assigned to each of all possible checksums (C);
- the first communication partner (200) forms a second table in which a checksum is assigned to a respective asymmetric checksum (c');
- the first table is the bijective mapping (G) and the second table is the inverse function ($G^{-1}$) of the bijective mapping; and
- the information about an inverse function comprises the second table.

13. Method according to Claim 12, wherein the second checksum ($c_2$) is computed by means of the inverse function ($G^{-1}$) in the form of the second table.

14. Method according to Claim 12 or 13, wherein the asymmetric checksum (c') is implemented as a numeral or as an alphanumeric value.

15. First communication partner (200) for creating and transmitting an asymmetric checksum for a message, having:

- a first computation device that uses a processor (211) to compute the asymmetric checksum (c') from a first checksum ($c_1$) by means of a bijective mapping (G) of a first set (C'), wherein

- the first checksum ($c_1$) is assigned from the set of all possible checksums (C) to the message (m) from a set of all possible messages (M) by means of a first function ($F_1$),
- the first checksum ($c_1$) is conditioned in particular by virtue of a second function ($F_2$) mapping the set of all possible checksums (C) onto the first set (C');

- a transmission device (220) that

- distributes a piece of information that defines an inverse function ($G^{-1}$) for the bijective mapping (G) to at least one second communication partner (300), wherein the inverse function ($G^{-1}$) is used to compute the first checksum ($c_1$) from the asymmetric checksum (c'); and
- transmits the asymmetric checksum (c') and the message (m) to the at least one second communication partner (300),

characterized in that the transmission device sends the first checksum ($c_1$) to the at least one second communication partner (300) in addition to the asymmetric checksum (c') and the message (m).

16. First communication partner (200) according to Claim 15, wherein the first communication partner (200) is a virtualized first communication device.

17. Second communication partner (300) for checking a message by means of an asymmetric checksum, having:

- a reception device (310) that

- receives a piece of information that defines an inverse function ($G^{-1}$) for a bijective mapping (G) of a first set (C') from a first communication partner;
- receives the asymmetric checksum (c') and the message (m) from the first communication partner;

- a second computation device (320) that uses a processor (321)

- to compute a second checksum ($c_2$) by means of the inverse function ($G^{-1}$) using the asymmetric checksum (c');
- to compute a third checksum ($c_3$) for the message (m),
wherein

- the third checksum ($c_3$) is assigned from the set of all possible checksums (C) to the message (m) from a set of all possible messages (M) by means of a first function ($F_1$),
- the third checksum ($c_3$) is conditioned in particular by virtue of a second function ($F_2$) mapping the set of all possible checksums (C) onto a first set (C'); and

- to establish a correctness of the message (m) if the second checksum ($c_2$) has a match with the third checksum ($c_3$),

**characterized in that** the receiving device receives a first checksum ($c_1$) from the first communication partner in addition to the message (m) and the asymmetric checksum (c'), and the second computation device additionally compares the first checksum ($c_1$) with the second checksum ($c_2$) and/or the third checksum ($c_3$), and the correctness of the message (m) is established if the first checksum ($c_1$) has a match with the second checksum ($c_2$) and/or with the third checksum ($c_3$).

18. Second communication partner (300) according to Claim 17, wherein the second communication partner (300) is a virtualized second communication device.

19. Computer system (500) having

- a first communication device (200) according to Claim 15 or 16, and
- a second communication device (300) according to Claim 17 or 18.

20. Integrated circuit that is equipped with configuration steps for performing the method according to one of Claims 1-14 or is configured with configuration steps such that the integrated circuit has the features of the first communication device according to Claim 15 or 16 or of the second communication device according to Claim 17 or 18.

21. Computer program product having program instructions for performing the method according to one of Claims 1-14.

22. Provision apparatus for the computer program product according to Claim 21, wherein the provision apparatus stores and/or provides the computer program product.

**Revendications**

1. Procédé pour la création et la transmission assistées par ordinateur d'une somme de contrôle asymétrique pour un message (m) par un premier partenaire de communication (200), dans lequel un processeur (211) exécute les étapes de procédé suivantes :

- calcul (105) de la somme de contrôle asymétrique (c') à partir d'une première somme de contrôle asymétrique ($c_1$) au moyen d'une représentation bijective (G) d'une première quantité (C')
dans lequel

- la première somme de contrôle ($c_1$) d'une quantité de sommes de contrôle (C) possibles est attribuée au message (m) d'une quantité de tous les messages (M) possibles, au moyen d'une première fonction ($F_1$),
- la première somme de contrôle ($c_1$) est traitée pour la première quantité (C'), en particulier par une représentation de la quantité de toutes les sommes de contrôle (C) possibles, par une deuxième fonction ($F_2$) ;

- distribution (110) d'une information qui définit une fonction d'inversion ($G^{-1}$) par rapport à la représentation bijective (G), à au moins un deuxième partenaire de communication (300), dans lequel au moyen de la fonction d'inversion ($G^{-1}$) , la première somme de contrôle ($c_1$) est calculée à partir de la somme de contrôle asymétrique (c') ; et
- transmission (115) de la somme de contrôle asymétrique (c') et du message (m) à l'au moins un deuxième partenaire de communication (300) ;

**caractérisé en ce qu'**en plus du message (m) et de la somme de contrôle asymétrique (c'), la première somme de contrôle asymétrique ($c_1$) est envoyée au deuxième partenaire de communication (300).

**2.** Procédé selon la revendication 1, dans lequel le calcul de la somme de contrôle asymétrique (c') forme un secret qui est connu du premier partenaire de communication (200) .

**3.** Procédé selon l'une des revendications précédentes, dans lequel

- le traitement de la première somme de contrôle ($c_1$) avec la deuxième fonction ($F_2$) est effectué dans une première étape de pré-traitement avant le calcul de la somme de contrôle asymétrique (c'), et
- la représentation bijective (G) est en particulier une représentation de la première quantité (C') sur elle-même.

**4.** Procédé pour le contrôle assisté par ordinateur d'un message au moyen d'une somme de contrôle asymétrique par un second partenaire de communication (300), dans lequel un processeur (321) est programmé pour exécuter les étapes suivantes :

- réception (150) d'une information qui définit une fonction d'inversion ($G^{-1}$) par rapport à une représentation bijective (G) d'une première quantité (C'), d'un premier partenaire de communication (200) ;
- réception (155) de la somme de contrôle asymétrique (c') et du message (m) d'un premier partenaire de communication (200) ;
- calcul (160) d'une deuxième somme de contrôle ($c_2$) au moyen de la fonction d'inversion ($G^{-1}$) par l'emploi de la somme de contrôle asymétrique (c');
- calcul (165) d'une troisième somme de contrôle ($c_3$) sur le message (m), dans lequel

- la troisième somme de contrôle ($c_3$) de la quantité de toutes les sommes de contrôle (C) possibles est attribuée au message (m) d'une quantité de tous les messages (M) possibles, au moyen d'une première fonction ($F_1$),
- la troisième somme de contrôle ($c_3$) est traitée pour la première quantité (C'), en particulier par une représentation des quantités de toutes les sommes de contrôle (C) possibles, au moyen d'une deuxième fonction ($F_2$) ; et

- constatation (170) d'une exactitude du message (m), dans le cas où la deuxième somme de contrôle ($c_2$) présente une concordance avec la troisième somme de contrôle ($c_3$) ;

**caractérisé en ce qu'**en plus du message (m) et de la somme de contrôle asymétrique (c'), une première somme de contrôle ($c_1$) est reçue du premier partenaire de communication,
dans lequel la première somme de contrôle ($c_1$) est en plus comparée à la deuxième somme de contrôle ($c_2$) et/ou la troisième somme de contrôle ($c_3$), et dans lequel l'exactitude du message (m) est déterminée dans le cas où la première somme de contrôle ($c_1$) présente une concordance avec la deuxième somme de contrôle ($c_2$) et/ou la troisième somme de contrôle ($c_3$) .

**5.** Procédé selon l'une des revendications précédentes, dans lequel le traitement de la troisième somme de contrôle ($c_3$) avec la deuxième fonction ($F_2$) est effectué dans une deuxième étape de pré-traitement avant la constatation de l'exactitude du message (m),

- la représentation bijective (G) est en particulier une représentation de la première quantité (C') sur elle-même.

**6.** Procédé selon la revendication 5, dans lequel

- la deuxième somme de contrôle ($c_2$) correspond à la première somme de contrôle ($c_1$) qui a été respectivement traitée par la deuxième fonction ($F_2$), et
- la première somme de contrôle ($c_1$) et la troisième somme de contrôle ($c_3$) sont en particulier respectivement un élément de la première quantité (C').

**7.** Procédé selon l'une des revendications précédentes, dans lequel la deuxième fonction ($F_2$) représente une somme de contrôle à 64 bits sur une somme de contrôle à 32 bits ou bien est l'identité.

**8.** Procédé selon l'une des revendications précédentes, dans lequel

- la première quantité (C') ou la quantité de toutes les sommes de contrôle (C) possibles est un monoïde,
- le monoïde en tant qu'élément neutre comprend l'élément un et une opération d'une combinaison est définie pour le monoïde,
- le premier partenaire de communication (200) sélectionne un élément (a) pouvant être inversé du monoïde ;
- le premier partenaire de communication (200) calcule un élément ($a_{inv}$) inversé par rapport à l'élément (a) pouvant être inversé ;
- la somme de contrôle (c') représentée est formée au moyen de la représentation bijective (G) sous forme de la combinaison de la première somme de contrôle ($c_1$) avec l'élément (a) pouvant être inversé,
- l'information comprend l'élément ($a_{inv}$) inversé ; et
- la combinaison en particulier de l'élément (a) pouvant être inversé et de la somme de contrôle asymétrique (c') donne l'élément un.

**9.** Procédé selon la revendication 8, dans lequel la deuxième somme de contrôle ($c_2$) est calculée au moyen de la fonction d'inversion ($G^{-1}$) sous forme de la combinaison de l'élément ($a_{inv}$) inversé avec la somme de contrôle asymétrique (c').

**10.** Procédé selon l'une des revendications 1 - 7, dans lequel

- la première quantité (C') ou la quantité de toutes les sommes de contrôle (C) possibles est un espace vectoriel ;
- le premier partenaire de communication (200) forme à partir de l'espace vectoriel, une matrice (A) pouvant être inversée ;
- le premier partenaire de communication (200) forme à partir de la matrice (A) pouvant être inversée, une matrice ($A^{-1}$) inversée ;
- l'information comprend la matrice ($A^{-1}$) inversée ; et
- la somme de contrôle asymétrique (c') est formée au moyen de la représentation bijective (G) sous forme de la multiplication de la matrice de la première somme de contrôle ($c_1$) avec la matrice (A).

**11.** Procédé selon la revendication 10, dans lequel la deuxième somme de contrôle ($c_2$) est calculée au moyen de la fonction d'inversion ($G^{-1}$) sous forme de la multiplication de matrice, en ce que la matrice ($A^{-1}$) inversée est multipliée par la somme de contrôle asymétrique (c').

**12.** Procédé selon l'une des revendications 1 - 7, dans lequel

- le premier partenaire de communication (200) forme un premier tableau dans lequel respectivement une somme de contrôle asymétrique (c') est attribuée à toutes les sommes de contrôle (C) possibles ;
- le premier partenaire de communication (200) forme un deuxième tableau dans lequel respectivement une somme de contrôle est attribuée à une somme de contrôle asymétrique (c') ;
- le premier tableau est la représentation bijective (G) et le deuxième tableau est la fonction d'inversion ($G^{-1}$) de la représentation bijective ; et
- l'information sur une fonction d'inversion comprend le deuxième tableau.

**13.** Procédé selon la revendication 12, dans lequel la deuxième somme de contrôle ($c_2$) est calculée au moyen de la fonction d'inversion ($G^{-1}$) sous forme du deuxième tableau.

**14.** Procédé selon la revendication 12 ou 13, dans lequel la somme de contrôle asymétrique (c') est implémentée en tant qu'un chiffre ou en tant qu'une valeur alphanumérique.

**15.** Premier partenaire de communication (200) pour la création et la transmission d'une somme de contrôle asymétrique pour un message, présentant :

- un premier dispositif de calcul qui, avec un processeur (211), calcule la somme de contrôle asymétrique (c') à partir d'une première somme de contrôle ($c_1$) au moyen d'une représentation bijective (G) d'une première quantité (C'),

dans lequel

- la première somme de contrôle ($c_1$) de la quantité de toutes les sommes de contrôle (C) possibles est attribuée au message (m) d'une quantité de tous les messages (M) possibles, au moyen d'une première fonction ($F_1$),
- la première somme de contrôle ($c_1$) est traitée pour la première quantité (C') par une deuxième fonction ($F_2$), en particulier par une représentation de la quantité de toutes les sommes de contrôle (C) possibles ;

- un dispositif d'émission (220) qui
- distribue une information qui définit une fonction d'inversion ($G^{-1}$) par rapport à la représentation bijective (G), à au moins un deuxième partenaire de communication (300), dans lequel la première somme de contrôle ($c_1$) est calculée à partir de la somme de contrôle asymétrique (c') au moyen de la fonction d'inversion ($G^{-1}$) ; et
- transmet la somme de contrôle asymétrique (c') et le message (m) à l'au moins un deuxième partenaire de communication (300), **caractérisé en ce que** le dispositif d'émission, en plus de la somme de contrôle asymétrique (c') et du message (m), envoie la première somme de contrôle ($c_1$) à l'au moins un deuxième partenaire de communication (300).

16. Premier partenaire de communication (200) selon la revendication 15, dans lequel le premier partenaire de communication (200) est un premier appareil de communication virtualisé.

17. Deuxième partenaire de communication (300) pour contrôler un message au moyen d'une somme de contrôle asymétrique, présentant :

- un dispositif de réception (310) qui
- reçoit d'un premier partenaire de communication, une information qui définit une fonction d'inversion ($G^{-1}$) par rapport à une représentation bijective (G) d'une première quantité (C') ;
- reçoit du premier partenaire de communication, la somme de contrôle asymétrique (c') et le message (m) ;
- un deuxième dispositif de calcul (320) qui, avec un processeur (321)
- calcule une deuxième somme de contrôle ($c_2$) au moyen de la fonction d'inversion ($G^{-1}$) en appliquant la somme de contrôle asymétrique (c') ;
- calcule une troisième somme de contrôle ($c_3$) sur le message (m), dans lequel

- la troisième somme de contrôle ($c_3$) de la quantité de sommes de contrôle (C) possibles est attribuée au message (m) d'une quantité de tous les messages (M) possibles, au moyen d'une première fonction ($F_1$),

- la troisième somme de contrôle ($c_3$) est traitée pour une première quantité (C'), en particulier par une représentation de la quantité de toutes les sommes de contrôle (C) possibles, par une deuxième fonction ($F_2$) ; et
- constate une exactitude du message (m) dans le cas où la deuxième somme de contrôle ($c_2$) présente une concordance avec la troisième somme de contrôle ($c_3$),

**caractérisé en ce que** le dispositif de réception, en plus du message (m) et de la somme de contrôle asymétrique (c'), reçoit une première somme de contrôle ($c_1$) du premier partenaire de communication et le deuxième dispositif de calcul compare en plus la première somme de contrôle ($c_1$) à la deuxième somme de contrôle ($c_2$) et/ou la troisième somme de contrôle ($c_3$) et l'exactitude du message (m) est constatée dans le cas où la première somme de contrôle ($c_1$) présente une concordance avec la deuxième somme de contrôle ($c_2$) et/ou la troisième somme de contrôle ($c_3$).

18. Deuxième partenaire de communication (300) selon la revendication 17, dans lequel le deuxième partenaire de communication (300) est un deuxième appareil de communication virtualisé.

19. Système d'ordinateur (500), présentant

- un premier appareil de communication (200) selon la revendication 15 ou 16, et

- un deuxième appareil de communication (300) selon la revendication 17 ou 18.

**20.** Circuit intégré qui est doté d'étapes de configuration pour exécuter le procédé selon l'une des revendications 1-14 ou d'étapes de configuration de telle sorte que le circuit intégré présente les caractéristiques du premier appareil de communication selon la revendication 15 ou 16, ou du deuxième appareil de communication selon la revendication 17 ou 18.

**21.** Produit de programme informatique comprenant des commandes de programme pour exécuter le procédé selon l'une des revendications 1-14.

**22.** Dispositif de mise à disposition pour le produit de programme informatique selon la revendication 21, dans lequel le dispositif de mise à disposition conserve en mémoire et/ou met à disposition le produit de programme informatique.

# FIG 1

```
┌─────────────────────┐
│                     │──105
└─────────────────────┘
           │
           ▼
┌─────────────────────┐
│                     │──110
└─────────────────────┘
           │
           ▼
┌─────────────────────┐
│                     │──115
└─────────────────────┘
```

# FIG 2

```
┌─────────────────────┐
│                     │──150
└─────────────────────┘
           │
           ▼
┌─────────────────────┐
│                     │──155
└─────────────────────┘
           │
           ▼
┌─────────────────────┐
│                     │──160
└─────────────────────┘
           │
           ▼
┌─────────────────────┐
│                     │──165
└─────────────────────┘
           │
           ▼
┌─────────────────────┐
│                     │──170
└─────────────────────┘
```

FIG 3

200

230

210
211
220

FIG 4

300

350

310
320
321

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HELMUT WITTEN et al.** Kann man RSA vertrauen? Asymmetrische Kryptografie für die Sekundarstufe I. *LOG IN Heft, Informatische Bildung für Computer in der Schule,* 01. Dezember 2012, 79-91, http://bscw.schule.de/pub/bscw.cgi/d1024037/RSA Sekl.pdf

- RSA-Kryptosystem. *Versionsunterschied-Wikipedia,* 15. September 2015, 1-4, https://de.wikipedia.org/w/index.php?title=RSA-Kryptosystem&diff=1463057000&oldid=145881181